Europäisches Patentamt

European Patent Office

Office européen des brevets

(11) Numéro de publication : **0 440 525 B1**

# (12) FASCICULE DE BREVET EUROPEEN

(45) Date de publication du fascicule du brevet :
24.11.93 Bulletin 93/47

(51) Int. Cl.⁵ : **B60R 16/02**

(21) Numéro de dépôt : **91400158.1**

(22) Date de dépôt : **24.01.91**

(54) **Dispositif de commande de l'alimentation électrique de plusieurs appareils électriques à partir d'une source de courant continu.**

(30) Priorité : **29.01.90 FR 9000996**

(43) Date de publication de la demande :
**07.08.91 Bulletin 91/32**

(45) Mention de la délivrance du brevet :
**24.11.93 Bulletin 93/47**

(84) Etats contractants désignés :
**DE GB IT**

(56) Documents cités :
**EP-A- 0 239 463**
**FR-A- 2 445 769**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**
Titulaire : **REGIE NATIONALE DES USINES RENAULT S.A.**
**34, Quai du Point du Jour**
**F-92109 Boulogne Billancourt Cédex (FR)**

(72) Inventeur : **Loth, Siri-Yuth**
**1 Allée Chanteclair**
**F-95350 Saint Brice Sous Forêt (FR)**

(74) Mandataire : **Tilliet, René Raymond Claude et al**
**Cabinet Lavoix 2, Place d'Estienne d'Orves**
**F-75441 Paris Cédex 09 (FR)**

## Description

La présente invention concerne un dispositif d'alimentation électrique de plusieurs appareils électriques locaux à partir d'une source unique de courant continu, ledit dispositif étant en état de veille en cas de non fonctionnement des appareils électriques locaux et activé par au moins un commutateur de commande disposé dans un appareil électrique local, comportant une station centrale avec au moins un commuta- teur bistable central branché entre une première borne de ladite source et les lignes d'alimentation des appareils électriques locaux et une résistance centrale branchée en parallèle sur ledit commutateur central, chaque appareil électrique local comportant une résistance locale et au moins un commutateur de commande branchés en série entre sa ligne d'alimentation et la deuxième borne de ladite source, chaque résistance locale formant avec la résistance centrale un pont diviseur de tension dont le point milieu est relié à un détecteur central qui commande la fermeture dudit commutateur central, chaque appareil électrique local fournissant à la station centrale une information de réouverture du commutateur central d'alimentation. L'invention s'applique en particulier à l'alimentation des différents appareils électriques d'un véhicule automobile à partir d'une unité centrale d'alimentation.

Dans ces dispositifs de type connu, qui sont décrits en particulier dans le brevet français 2 596 216 ou la demande correspondante EP-A-0 239 463, l'unité centrale reste en état de veille et peut être activée par l'actionnement du commutateur de commande local grâce au pont diviseur précité dont la tension médiane est détectée par le détecteur central qui "active" l'unité centrale dans le cas d'une demande exprimée par l'actionnement d'un commutateur de commande local. Ce dispositif permet de ne commander l'alimentation des appareils électriques locaux que lorsque l'un d'entre eux est utilisé; ceci permet de limiter au minimum les pertes de consommation lorsqu'aucun des appareils électriques n'est utilisé. Cependant, à l'état de veille, il subsiste des courants de fuite circulant à travers la résistance centrale et les impédances de fuite desdits appareils.

La présente invention a pour objet un dispositif de commande d'alimentation du type précité qui permet de réduire encore plus les courants de fuite pendant l'état de veille.

Le dispositif de commande d'alimentation en énergie électrique selon l'invention est notamment caractérisé en ce que chaque appareil électrique local comporte des moyens d'isolement dudit appareil électrique local par rapport à sa ligne d'alimentation, des moyens de suppression du courant circulant dans ladite résistance locale et des moyens de détection de la fermeture du commutateur bistable central qui commandent la fermeture desdits moyens d'isolement et l'ouverture desdits moyens de suppression de courant lorsque le commutateur bistable central se ferme.

Selon un mode de réalisation, les moyens de suppression du courant circulant dans ladite résistance locale sont constitués par un rupteur local branché en série avec ladite résistance locale, lesdits moyens d'isolement de l'appareil électrique local par rapport à sa ligne d'alimentation sont constitués par un contacteur local branché dans la ligne d'alimentation en aval desdits commutateur de commande et résistance locale et ledit dispositif de commande comporte un détecteur local branché en amont dudit contacteur local et commandant lesdits rupteur et contacteur locaux.

Du fait de l'utilisation du contacteur local qui commande en fait l'alimentation de l'appareil local, à l'état de veille, il n'existe plus de courants de fuite dûs aux impédances de fuite dudit appareil local; l'actionnement du commutateur de commande entraîne, de la manière décrite plus haut, la fermeture du commutateur central par l'intermédiaire du détecteur central; le détecteur local réagissant à la différence de tension appliquée à l'appareil commande alors la fermeture du contacteur local et l'ouverture du rupteur local, ce qui, d'une part, assure l'alimentation de l'appareil électrique et, d'autre part, interrompt aussitôt la circulation du courant à travers la résistance locale, même si le commutateur de commande reste actionné.

D'autres caractéristiques et avantages de l'invention ressortiront de la description qui suit d'exemples de réalisation en se référant aux dessins annexés sur lesquels :

- La figure 1 est le schéma de principe d'un dispositif de commande d'alimentation électrique de type connu.
- La figure 2 est le schéma de principe d'un dispositif de commande d'alimentation électrique conforme à la présente invention, et
- Les figures 3 à 5 sont des schémas de modes de réalisation de l'invention.

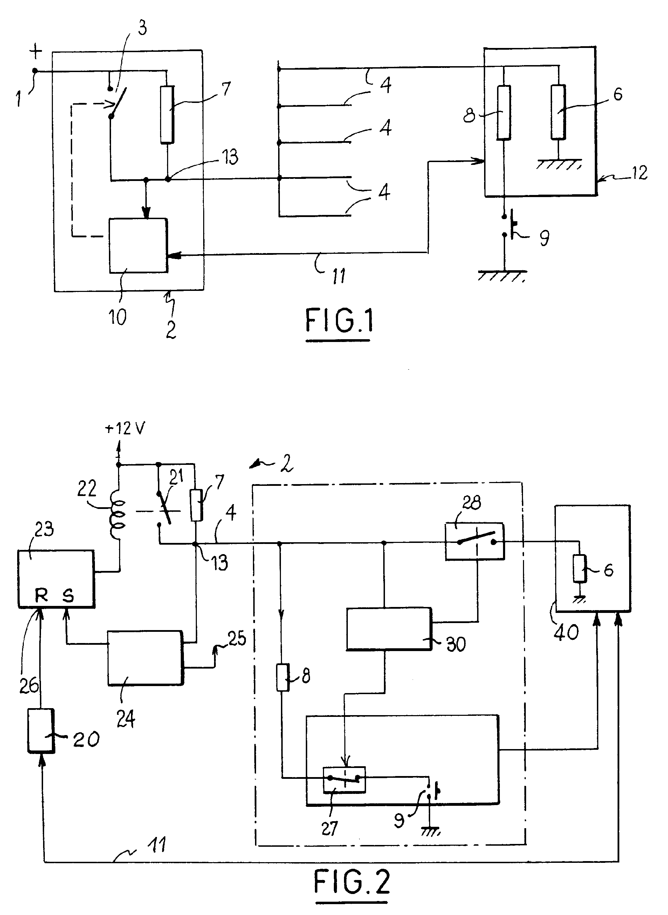

La Fig.1 décrit un dispositif de commande d'alimentation électrique d'appareils électriques locaux 12 à partir d'une station centrale de commande 2. La source d'alimentation est une source de courant continu dont on voit en 1 le pôle positif et dont le pôle négatif est relié à la masse, comme cela est le cas de la majorité des véhicules automobiles. La station centrale 2 comporte un commutateur central 3 qui relie la borne d'alimentation positive 1 à différentes lignes d'alimentation 4 alimentant chacune un appareil électrique local 12 tel que, dans le cas d'un véhicule automobile, un essuie-glace, une alarme, un lève-vitres électrique, etc. L'impédance de cet appareil électrique est schématisée en 6. Le commutateur central 2 n'est fermé que lorsque des appareils électriques locaux sont utilisés. A cet effet, on prévoit une première résistance centrale 7 en parallèle sur le commutateur central 3 et, dans chaque appareil électrique local, une résistance locale 8 et un commutateur de commande local 9 branchés en série entre la ligne d'alimentation 4 de l'appareil considéré et la masse. Un détecteur central 10 est branché au point médian 13 du pont diviseur de tension constitué par les résistances 7 et 8 et ce détecteur 10 commande le commutateur central 3; ce détecteur 10 reçoit par ailleurs, par l'intermédiaire d'une ligne ou bus d'information 11 une information de fonctionnement provenant de l'appareil électrique local 12.

Le dispositif de commande qui vient d'être décrit est représenté à l'état de veille, c'est-à-dire que le commutateur central 3 est ouvert ainsi que le commutateur local de commande 9. Lorsque l'on actionne ce dernier, en fermant les contacts, on établit une circulation de courant à travers le pont diviseur constitué par les résistances 7 et 8 et la variation de tension qui en résulte au point médian 13 est captée par le détecteur 10 qui commande la fermeture du commutateur central 3. Lorsque le détecteur 10 reçoit, par l'intermédiaire du bus 11, de l'appareil local, une information d'arrêt de fonctionnement de ce dernier, il commande la réouverture du commutateur central 3.

A l'état de veille représenté sur la Fig.1, la tension sur la ligne d'alimentation 4 de chacun des appareils est donnée par la formule suivante :

$$V1 = \frac{V \times Z}{R7 + Z}$$

dans laquelle V est la tension de la source d'alimentation, Z l'impédance 6 de l'appareil électrique local 12 et R7 la valeur de la résistance 7.

On voit que plus la valeur Z tend vers zéro, plus la tension au point médian du diviseur tend vers zéro, ce qui diminue l'immunité aux bruits parasites sur cette ligne d'alimentation. Cette faible valeur de Z est dûe en particulier au fait que dans le cas de nombreux appareils, leurs impédances se retrouvent toutes en parallèle sur les lignes d'alimentation. Il faut impérativement choisir une valeur de la résistance 8 qui soit plus faible que l'impédance Z précitée afin d'assurer le réveil du dispositif de commande d'alimentation; or cette résistance 8 sera traversée par un courant important lorsque le commutateur 3 sera fermé et que l'on continuera d'actionner le commutateur local 9. Il en résulte que le choix de la résistance et de la puissance de la résistance 8 est très critique.

La Fig.2 illustre de manière schématique un dispositif de commande d'alimentation conforme à la présente invention. Sur cette figure, le commutateur 3 est constitué par le contact 21 d'un relais 22 qui est commandé par une bascule 23 qui reçoit un signal de d'activation fourni par un comparateur 24 comparant la tension au point milieu 13 du pont diviseur à une tension de référence fournie en 25. La bascule 23 reçoit sur son entrée de réinitialisation 26 un signal de retour à l'état de veille. Ce signal est élaboré par une unité centrale 20 qui reçoit par le bus 11 une information de fonctionnement provenant des appareils électriques locaux en cours d'utilisation.

Dans l'appareil local on retrouve le commutateur de commande 9, la résistance 8 en série et l'impédance 6 propre de l'appareil considéré. Conformément à l'invention, on prévoit tout d'abord, en série avec la résistance 8 et le commutateur 9, un rupteur 27, c'est-à-dire un dispositif monostable fermé en position de repos; on prévoit également, en aval du circuit constitué par la résistance 8 et le commutateur 9, un contacteur 28, c'est-à-dire un dispositif monostable qui est ouvert en position de repos; un détecteur local 30 est branché en amont du contacteur 28.

Du fait de la présence du contacteur 28, à l'état de veille, l'impédance 6 de l'appareil électrique 40 considéré est totalement isolée; par conséquent les impédances des différents appareils n'interviennent plus sur le choix de la résistance 8. Lorsque l'on actionne le commutateur 9 pour faire fonctionner l'appareil 40, on établit le courant dans le pont diviseur constitué par les résistances 7 et 8 ce qui entraîne, comme expliqué plus haut, la fermeture du commutateur central 21. Il en résulte que la tension de la source continue est alors appliquée sur la ligne d'alimentation 4, ce qui est détecté par le détecteur local 30 qui agit à la fois sur le contacteur 28 pour obtenir sa fermeture, ce qui entraîne l'alimentation de l'appareil 40, et sur le rupteur 27 qui s'ouvre, ce qui supprime la consommation dans la branche constituée par la résistance 8 et le commutateur de commande 9; même si on continue à fermer cet interrupteur local de commande 9, le courant dans la branche précitée est interrompu aussitôt après le réveil de la station centrale 2. Lorsque la bascule 23 reçoit un ordre de réinitialisation, le relais 22 n'est plus alimenté et le commutateur 21 est ouvert, ce qui met la station centrale 2 en état de veille et le détecteur local 30 ne recevant plus la tension de la source d'alimentation désactive le contacteur 28 qui revient en position ouverte et le rupteur 27 qui revient en position de fermeture; l'ensemble est alors revenu à l'état de veille.

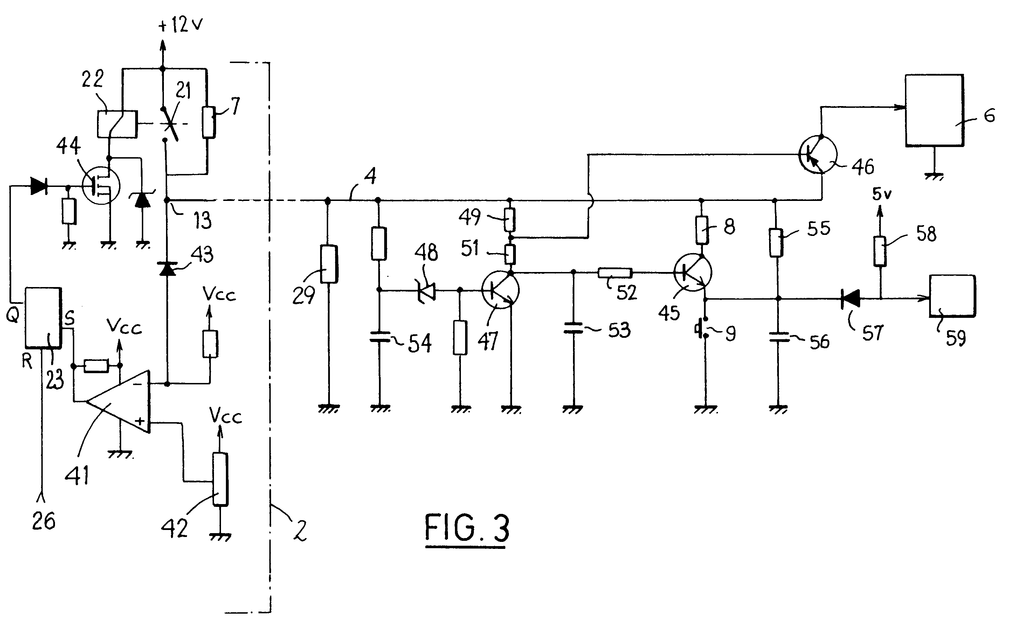

La Fig.3 représente un mode de réalisation pratique d'un dispositif conforme à la présente invention. En ce qui concerne la station centrale 2, on constate que le comparateur est constitué d'un amplificateur opérationnel 41 dont l'entrée positive reçoit une tension de référence fournie par un potentiomètre 42 et qui reçoit, sur sa borne d'entrée négative, par l'intermédiaire d'une diode montée en inverse 43, la tension du point milieu 13 du diviseur de tension constitué par les résistances 7 et 8. La sortie de la bascule 23 commande le relais 22 par l'intermédiaire d'un transistor 44, tel qu'un MOSFET. La tension Vcc appliquée sur le potentiomètre 42 peut être une tension stabilisée fournie par exemple par une diode Zener ou la tension de la batterie protégée contre les surtensions.

En ce qui concerne l'appareil électrique local, on constate que le rupteur 27 est constitué par un transistor NPN 45 et que le contacteur 28 est constitué par un transistor PNP 46. Le détecteur 30 comporte essentiellement un transistor NPN 47 et une résistance 29 constituant avec la résistance 7 de la station centrale 2 un autre pont diviseur. Le transistor 47 et la résistance 29 sont branchés chacun entre la ligne 4 et la masse.

Le pont diviseur constitué par les résistances 7 et 29 fournit, à l'état de veille, une tension V1 qui est inférieure à la tension inverse d'une diode Zener 48 branchée dans le circuit de base du transistor 47, de manière à bloquer ce transistor 47 lorsque l'on se trouve à l'état de veille. La base du transistor 45 est commandée par l'intermédiaire de résistances 49, 51 et 52 de sorte que ce transistor 45 est prêt à se saturer lorsque le commutateur 9 se fermera. Le transistor 46 dont la base est reliée à la tension positive V1 est bloqué, ce qui isole l'appareil local et en particulier son impédance 6.

Lorsque l'on ferme le commutateur 9 qui peut par exemple être un contact de feuillure de porte, un contact d'appel de phare, d'avertisseur, etc, le transistor 45 est immédiatement saturé, ce qui entraîne l'alimentation de la résistance 8 du pont diviseur. La variation de la tension au point milieu 13 est détectée par l'amplificateur opérationnel 41 qui agit sur la bascule 23 pour commander l'alimentation du relais 22, ce qui entraîne la fermeture du commutateur 21. La résistance 8 peut être choisie de faible valeur par exemple 3 Ohms si bien que la tension au point 13 du diviseur tombe à une valeur presque nulle. Un condensateur 53 branché entre la masse et le collecteur du transistor 47 était, pendant la veille, chargé au potentiel V1 et sa décharge à travers les résistances 49, 51 et 52 permettra de maintenir la saturation du transistor 45 et, par suite, de maintenir la tension sur la ligne 4 à son faible niveau (0,5 V par exemple) pendant quelques centaines de microsecondes.

Lorsque le commutateur 21 se ferme, la tension sur la ligne d'alimentation 4 passe à une valeur proche de la tension de la batterie du véhicule qui est supérieure à la tension inverse de la diode Zener 48, ce qui sature le transistor 47 et, par suite, sature le transistor 46 et bloque le transistor 45. L'appareil électrique local est alors alimenté par la tension de la batterie et peut donc fonctionner normalement. Le courant important traversant la résistance 8 de faible valeur et le commutateur 9 est alors interrompu. Un condensateur 54 branché entre la masse et la diode Zener 48 prolonge le blocage du transistor 47 au moment de la fermeture du commutateur 21 afin de faire circuler un courant important, par exemple 500 mA en 500 microsecondes dans le commutateur 9, ce qui permet de désoxyder les contacts de ce commutateur.

Afin de fournir une information de commande à la station centrale 2, on prévoit une résistance 55 branchée entre la ligne d'alimentation 4 en amont du transistor 46 et l'émetteur du transistor 45, ceci permet de faire circuler un courant dans le commutateur 9 même lorsque le transistor 45 est bloqué. La circulation de ce courant dans le commutateur 9 permet, par l'intermédiaire d'un circuit constitué d'un condensateur 56 branché en parallèle sur le commutateur 9 et d'une diode 57 de créer un signal d'information à partir d'une tension logique, par exemple 5V appliquée à une résistance 58 dont l'autre borne est reliée à la diode 57. Le signal d'information ainsi obtenu en 59 est envoyé par le bus d'information à la station centrale 2, en particulier pour fournir un signal de commande de marche-arrêt.

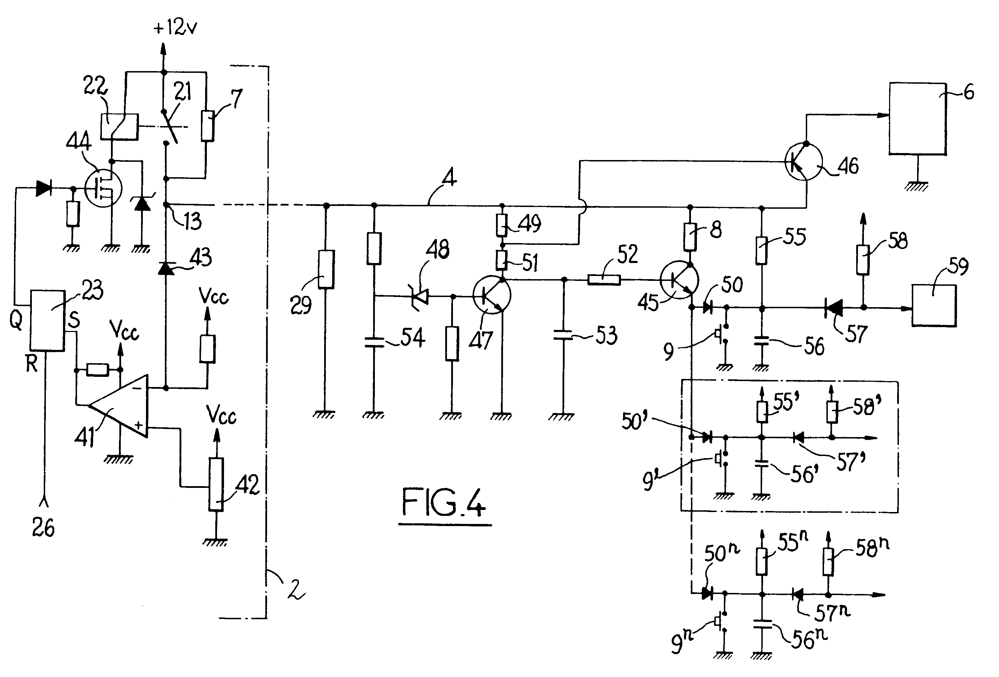

La Fig.3 représente un dispositif conforme à l'invention qui peut être utilisé dans le cas où l'appareil électrique local ne comporte qu'un seul commutateur de commande 9. Le Fig.4 représente une variante de réalisation qui permet l'utilisation avec un appareil électrique local comportant plusieurs commutateurs de commande 9.

Dans ce cas, on prévoit pour chaque commutateur 9, 9',..., $9^n$ une résistance de maintien du courant 55, 55',..., $55^n$ et un circuit de formation du signal d'information 56-59, 56'-59',..., $56^n$-$59^n$. Par ailleurs, pour éviter que tous les circuits formateurs de signal d'information ne soient activés lorsque l'on ferme un seul commutateur de commande, on dispose, en amont de chaque commutateur 9, entre ce dernier et l'émetteur du transistor 45, une diode 50, 50',..., $50^n$ qui s'oppose à la circulation d'un courant vers la masse dans les résistances 55 dont le commutateur de commande correspondant n'a pas été actionné.

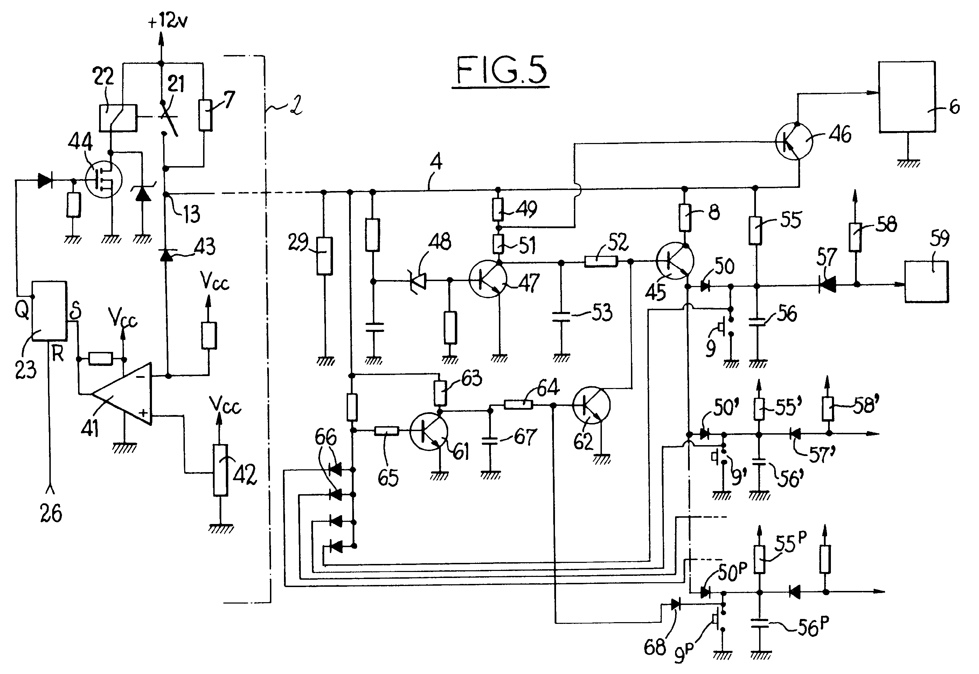

La Fig.5 représente une autre variante consistant à introduire dans le circuit de la Fig.4 un circuit de blocage permettant d'obtenir la mise en veille même si un des commutateurs d'un appareil local comportant plusieurs commutateurs de commande reste fermé. Ceci permet de supprimer l'alimentation des stations 6 et en particulier, à titre d'exemple, celle du plafonnier lorsque, le véhicule étant au garage, une des portes reste ouverte.

Ce circuit de blocage comprend essentiellement deux transistors NPN 61 et 62; le premier transistor 61 est branché en série avec une résistance 63 entre la ligne 4 et la masse; le collecteur de ce transistor 61 commande, par l'intermédiaire d'une résistance 64, la base du transistor 62 dont l'émetteur est relié à la masse et le collecteur à la base du transistor 45. La base du transistor 61 est reliée à une résistance 65 qui est elle même reliée, par l'intermédiaire d'une diode 66 au contact amont de chacun des commutateurs locaux 9 à $9^n$ considérés, c'est-à-dire à l'émetteur du transistor 45, par l'intermédiaire de diodes 50 à $50^n$.

On s'aperçoit que, lorsqu'un ou plusieurs des commutateurs considérés est fermé, pendant le réveil le transistor 61 est bloqué et sature le transistor 62 qui lui-même bloque le transistor 45.

Lors de la mise en veille, le transistor 47 devient bloqué, mais il ne peut pas assurer la saturation du transistor 45 qui reste bloqué par le transistor 62. Il en résulte que la ligne 4 est complètement déconnectée malgré la mise à la masse par les différents commutateurs qui sont reliés au transistor 61. Les commutateurs peuvent par exemple être constitués par les contacts de feuillure de porte d'un véhicule automobile.

Pour pouvoir activer le dispositif, il faut tout d'abord que tous les commutateurs locaux 9 à $9^n$ considérés soient ouverts; ensuite on ferme l'un de ces commutateurs. En effet, lorsque tous les commutateurs considérés sont ouverts, le transistor 61 devient saturé et bloque le transistor 62 qui à son tour laisse saturer le transistor 45 ; lorsque l'on ferme un commutateur 9 considéré, le transistor 45 ramène la ligne 4 au potentiel zéro et bloque ensuite le transistor 61. Ce transistor 61 étant bloqué, le condensateur 67 qui se trouve en parallèle sur l'émetteur et le collecteur du transistor 61 se charge à travers la résistance 63 avec une constante de temps qui correspond au produit RC du condensateur 67 et de la résistance 63; lorsque cette charge est réalisée, le transistor 62 est saturé, ce qui entraîne le blocage du transistor 45 et le cycle peut se répéter de cette manière.

On réalise ainsi un circuit de blocage du rupteur local 45, ce circuit de blocage étant commandé par la tension aux bornes de chacun des commutateurs de commande 9, 9',..., $9^n$.

Dans ce mode de réalisation, on peut prévoir un circuit spécial pour un commutateur local prioritaire, par exemple un commutateur local de commande du signal de détresse; ce commutateur $9^p$ est relié directement, par l'intermédiaire d'une diode 68, à la base du transistor 62. Il en résulte que la fermeture de ce commutateur $9^p$ bloque le transistor 62 qui à son tour laisse saturer le transistor 45.

On réalise ainsi un circuit de commande prioritaire pour le commutateur $9^p$, circuit qui agit sur le transistor 45 par l'intermédiaire du transistor 62.

## Revendications

1. Dispositif d'alimentation électrique de plusieurs appareils électriques locaux (12) à partir d'une source unique (1) de courant continu, ledit dispositif étant en état de veille en cas de non fonctionnement des appareils électriques locaux (12) et activé par au moins un commutateur de commande (9,9'-$9^n$) disposé dans un appareil électrique local (12), comportant une station centrale (2) avec au moins un commutateur bistable central (3;21-23) branché entre une première borne de ladite source et les lignes d'alimentation (4) des appareils électriques locaux (12) et une résistance centrale (7) branchée en parallèle sur ledit commutateur central (3;21-23), chaque appareil électrique local (12) comportant une résistance locale (8) et au moins un commutateur de commande (9) branchés en série entre sa ligne d'alimentation (4) et la deuxième borne de ladite source, chaque résistance locale (8) formant avec la résistance centrale (7) un pont diviseur de tension dont le point milieu (13) est relié à un détecteur central (10;24;41-43) qui commande la fermeture dudit commutateur central (3;21-23), chaque appareil électrique local fournissant à la station centrale (2) une information (26) de réouverture du commutateur central d'alimentation (3;21-23), caractérisé en ce que chaque appareil électrique local (12) comporte des moyens d'isolement (28,46) dudit appareil électrique local (12) par rapport à sa ligne d'alimentation (4), des moyens (27;45) de suppression du courant circulant dans ladite résistance locale (8) et des moyens (30;29,47-49) de détection de la fermeture du commutateur bistable central (3;21-23) qui commandent la fermeture desdits moyens d'isolement et l'ouverture desdits moyens de suppression de courant lorsque le commutateur bistable central se ferme.

2. Dispositif d'alimentation en énergie électrique selon la revendication 1, caractérisé en ce que les moyens de suppression du courant circulant dans ladite résistance locale (8) sont constitués par un rupteur local (27;45) branché en série avec ladite résistance locale (8), en ce que lesdits moyens d'isolement de l'appareil électrique local (12) par rapport à sa ligne d'alimentation (4) sont constitués par un contacteur local (28;46) branché dans la ligne d'alimentation (4) en aval desdits commutateur de commande (9,9'-$9^n$) et résistance locale (8) et en ce qu'il comporte un détecteur local (30;29,47-49) branché en amont dudit contacteur local (28;46) et commandant lesdits rupteur (27;45) et contacteur (28;46) locaux.

3. Dispositif de commande d'alimentation électrique selon la revendication 2, caractérisé en ce que le commutateur central (3) est constitué par un relais (21,22) commandé par une bascule (23) et en ce que le détecteur central (10,24) est constitué par un comparateur (24).

4. Dispositif de commande d'alimentation électrique selon la revendication 2 ou 3, caractérisé en ce que le rupteur local (27) et le contacteur local (28) sont constitués par des transistors (45,46).

5. Dispositif de commande d'alimentation électrique selon l'une quelconque des revendications 1 à 4, caractérisé en ce que, pour fournir une information de commande à la station centrale (2), on branche en parallèle sur chaque commutateur de commande (9,9'-9$^n$) un circuit de formation d'un signal de fonctionnement (55-59), ledit signal de fonctionnement étant transmis par le bus d'information (11) à une unité centrale (20).

6. Dispositif de commande d'alimentation électrique selon l'une quelconque des revendications 1 à 5, caractérisé en ce que le détecteur local comprend un transistor (47) et une résistance (29) branchés chacun entre la ligne d'alimentation (4) et la deuxième borne de la source de courant continu.

7. Dispositif de commande d'alimentation électrique selon la revendication 6, caractérisé en ce que, dans le cas où l'appareil électrique local (12) comporte plusieurs commutateurs de commande (9,9',...9$^n$), une diode (50,50'...,50$^n$) est inséré entre le rupteur local (45) et le commutateur de commande (9).

8. Dispositif de commande d'alimentation électrique selon la revendication 7, caractérisé en ce que, en vue d'obtenir la mise en veille même si un des commutateurs de commande (9,9',...,9$^n$) d'un appareil local (12) comportant plusieurs commutateurs de commande (9,9',...,9$^n$) reste fermé, chaque appareil électrique local comporte un circuit (61-65) de blocage du rupteur local (45) commandé par la tension aux bornes de chacun des commutateurs de commande (9,9',...9$^n$).

9. Dispositif de commande d'alimentation électrique selon la revendication 8, caractérisé en ce que ledit circuit de blocage comprend deux étages à transistor (61,63,65;62,64) et commande la base du transistor (45) constituant le rupteur local.

10. Dispositif de commande d'alimentation électrique selon la revendication 9, caractérisé en ce que le transistor (62) du deuxième étage dudit circuit de blocage est commandé par un circuit de commande prioritaire constitué par une diode (68) reliant la base du transistor (62) à la borne amont d'un commutateur de commande (9$^p$).

**Patentansprüche**

1. Vorrichtung zum elektrischen Speisen von mehreren örtlichen elektrischen Geräten (12) von einer einzigen Gleichstromquelle (1) aus, wobei die Vorrichtung im Falle keines Betriebes der örtlichen elektrischen Geräte (12) in stand-by-Position ist und durch zumindest einen in einem örtlichen elektrischen Gerät (12) angeordneten Steuerungsschalter (9, 9'-9$^n$) aktiviert wird, wobei sie eine Zentralstation (2) mit zumindest einem bistabilen Zentralschalter (3; 21-23) aufweist, der zwischen einer ersten Anschlußklemme der besagten Quelle und den Stromzuleitungen (4) der örtlichen elektrischen Geräte (12) angeschlossen ist , und einen Zentralwiderstand (7) der parallel zu dem Zentralschalter (3; 21-23) angeschlossen ist, wobei jedes örtliche elektrische Gerät (12) einen örtlichen Widerstand (8) und zumindest einen Steuerungsschalter (9), die in Reihe zwischen seiner Stromzuleitung (4) und der zweiten Anschlußklemme der Quelle angeschlossen sind, aufweisen, wobei jeder örtliche Widerstand (8) mit dem Zentralwiderstand (7) eine Spannungstrennbrücke bildet, deren Mittelpunkt (13) mit einem Zentraldetektor (10; 24; 41-43) verbunden ist, der das Schließen des Zentralschalters (3; 21-23) steuert, wobei jedes örtliche elektrische Gerät der Zentralstation (2) eine Information (26) der Wiederöffnung des Zentralspeisungsschalters (3; 21-23) liefert, dadurch gekennzeichnet, daß jedes örtliche elektrische Gerat (12) Isoliermittel (28, 46) des elektrischen Gerätes (12) bezüglich seiner Stromzuleitung (4) aufweist, und Unterdrückungsmittel (27, 45) des in dem örtlichen Widerstand (8) fließenden Stromes, und Detektionsmittel (30; 29, 47-49) der Schließung des bistabilen Zentralschalters (3; 21-23), die die Schließung der Isoliermittel und die Öffnung der Stromunterdrückungsmittel steuern, wenn sich der bistabile Zentralschalter schließt.

2. Vorrichtung zum elektrischen Speisen gemäß Anspruch 1, dadurch gekennzeichnet, daß die Unterdrückungsmittel des in dem örtlichen Widerstand (8) fließenden Stromes von einem örtlichen Lastschalter (27; 45) gebildet, der in Reihe mit dem örtlichen Widerstand (8) angeschlossen ist, und daß die Isoliermittel des örtlichen elektrischen Gerätes (12) bezüglich seiner Stromzuleitung (4) von einem örtlichen Einschalter (28;46) gebildet sind, der in der Stromzuleitung (4) unterstromig von dem Steuerungsschalter (9, 9'-9$^n$) und dem örtlichen Widerstand (8) angeschlossen ist, und daß die Steuervorrichtung einen örtlichen Detektor (30; 29, 47-49) aufweist, der oberstromig von dem örtlichen Einschalter (28; 46) angeschlossen ist und den örtlichen Lastschalter (27; 45) und Einschalter (28;46) steuert.

3. Steuervorrichtung zum elektrischen Speisen gemäß Anspruch 2, dadurch gekennzeichnet, daß der Zentralschalter (3) von einem Relais (21,22) gebildet ist, das von einer Kippschaltung (23) gesteuert ist, und daß der Zentraldetektor (10, 24) von einem Komparator (24) gebildet ist.

4.  Steuervorrichtung zum elektrischen Speisen gemäß Anspruch 2 oder 3, dadurch gekennzeichnet, daß der örtliche Lastschalter (27) und der örtliche Einschalter (28) von Transistoren gebildet sind.

5.  Steuervorrichtung zum elektrischen Speisen gemäß irgendeinem der Ansprüche 1 bis 4, dadurch gekennzeichnet, daß man, um eine Steuerungsinformation an die Zentralstation (2) zu liefern, parallel zu jedem Steuerungsschalter (9, 9'-9n) einen Stromkreis zur Bildung eines Betriebssignals (55-59) anschließt, wobei das Betriebssignal durch den Informationsbus (11) an die Zentraleinheit (20) übertragen wird.

6.  Steuervorrichtung zum elektrischen Speisen gemäß irgendeinem der Ansprüche 1 bis 5, dadurch gekennzeichnet, daß der örtliche Detektor einen Transistor (47) und einen Widerstand (29) aufweist, die jeweils zwischen der Stromzuleitung (4) und der zweiten Anschlußklemme der Gleichstromquelle angeschlossen sind.

7.  Steuervorrichtung zum elektrischen Speisen gemäß Anspruch 6, dadurch gekennzeichnet, daß in dem Fall, wo das örtliche elektrische Gerat (12) mehrere Steuerungsschalter (9, 9',...,9n) aufweist, eine Diode (50, 50'..., 50n ) zwischen dem örtlichen Lastschalter (45) und dem Steuerungsschalter (9) eingesetzt ist.

8.  Steuervorrichtung zum elektrischen speisen gemäß Anspruch 7, dadurch gekennzeichnet, daß, im Hinblick darauf, die stand-by-Position zu erlangen, selbst wenn einer der Steuerungsschalter (9, 9',..., 9n) eines örtlichen elektrischen Gerätes (12), das mehrere Steuerungsschalter (9, 9',..., 9n) aufweist, geschlossen bleibt, jedes örtliche elektrische Gerät einen Blockierungskreislauf (61-65) des von der Spannung an den Klemmen eines jeden der Steuerungsschalter (9, 9',..., 9n) gesteuerten Lastschalters (45) aufweist.

9.  Steuervorrichtung zum elektrischen Speisen gemäß Anspruch 8, dadurch gekennzeichnet, daß der Blockierungskreislauf zwei Transistorebenen (61, 63, 65, 62, 64) umfaßt, und er die Basis des Transistors (45), der den örtlichen Lastschalter bildet, steuert.

10. Steuervorrichtung zum elektrischen Speisen gemäß Anspruch 9, dadurch gekennzeichnet, daß der Transistor (62) der zweiten Ebene des Blockierungskreislaufs von einem vorrangigen Steuerkreislauf gesteuert wird, der von einer Diode (68) gebildet ist, die die Basis des Transistors (62) mit der oberstromigen Klemme eines Steue

rungsschalters (9p) verbindet.

Claims

1.  Device for the electrical power supply of a plurality of local electrical apparatus (12) from a single source (1) of direct current, said device being in a standby condition in the case of non-operation of the local electrical apparatus (12) and being activated by at least one control switch (9, 9', 9n) disposed in a local electrical apparatus (12), comprising a central unit (2) with at least one central bistable switch (3; 21-23) connected between a first terminal of said source and the power supply lines (4) of the local electrical apparatus (12) and a central resistor (7) connected in parallel with said central switch (3; 21-23), each local electrical apparatus (12) comprising a local resistor (8) and at least one control switch (9) connected in series between its power supply line (4) and the second terminal of said source, each local resistor (8) forming with the central resistor (7) a voltage divider bridge whereof the median point (13) is connected to a central detector (10; 24; 41-43) which controls the closure of said central switch (3; 21-23), each local electrical apparatus supplying the central unit (2) information (26) for reopening of the central power supply switch (3; 21-23), characterised in that each local electrical apparatus (12) comprises means (28, 46) for isolating said local electrical apparatus (12) with respect to its power supply line (4), means (27; 45) for suppressing the current circulating in said local resistor (8) and means (30; 29, 47-49) for detecting the closure of the central bistable switch (3; 21-23) which control the closure of said isolation means and the opening of said means for suppressing current when the central bistable switch closes.

2.  Device for the supply of electrical power according to Claim 1, characterised in that the means for suppressing the current circulating in said local resistor (8) are constituted by a local contact breaker (27; 45) connected in series with said local resistor (8), in that said means for isolating the local electrical apparatus (12) with respect to its power supply line (4) are constituted by a local contactor (28; 46) connected in the power supply line (4) downstream of said control switch (9, 9'-9n) and local resistor (8) and in that it comprises a local detector (30; 29, 47-49) connected upstream of said local contactor (28; 46) and controlling said local contact breaker (27; 45) and contactor (28; 46).

3.  Device for controlling the electrical power supply according to Claim 2, characterised in that the central switch (3) is constituted by a relay (21, 22) controlled by a flip-flop (23) and in that the central detector (10, 24) is constituted by a comparator (24).

4. Device for controlling the electrical power supply according to Claim 2 or 3, characterised in that the local contact breaker (27) and the local contactor (28) are constituted by transistors (45, 46).

5. Device for controlling the electrical power supply according to one of Claims 1 to 4, characterised in that, in order to provide control information to the central unit (2), a circuit for the formation of an operating signal (55-59) is connected in parallel with each control switch (9, 9'-9$^n$), said operating signal being transmitted by the information bus (11) to a central unit (20).

6. Device for controlling the electrical power supply according to one of Claims 1 to 5, characterised in that the local detector comprises a transistor (47) and a resistor (29) each connected between the power supply line (4) and the second terminal of the source of direct current.

7. Device for controlling the electrical power supply according to Claim 6, characterised in that, in the case where the local electrical apparatus (12) comprises several control switches (9, 9',...9$^n$), a diode (50, 50'..., 50$^n$) is inserted between the local contact breaker (45) and the control switch (9).

8. Device for controlling the electrical power supply according to Claim 7, characterised in that, with a view to obtaining the standby condition even if one of the control switches (9, 9',..., 9$^n$) of a local apparatus (12) comprising several control switches (9, 9'.... 9$^n$) remains closed, each local electrical apparatus comprises a circuit (61-65) for blocking the local contact breaker (45) controlled by the voltage at the terminals of each of the control switches (9, 9',... 9$^n$).

9. Device for controlling the electrical power supply according to Claim 8, characterised in that said blocking circuit comprises two transistor stages (61, 63, 65; 62, 64) and controls the base of the transistor (45) constituting the local contact breaker.

10. Device for controlling the electrical power supply according to Claim 9, characterised in that the transistor (62) of the second stage of said blocking circuit is controlled by a priority control circuit constituted by a diode (68) connecting the base of the transistor (62) to the upstream terminal of a control switch (9$^p$).

FIG.1

FIG.2

FIG. 3

FIG.4

EP 0 440 525 B1

FIG.5

EP 0 440 525 B1